# EUROPEAN PATENT SPECIFICATION

(11) **EP 2 894 130 B1**
(45) Date of publication and mention of the grant of the patent: **02.10.2019**
(21) Application number: 13834628.3
(22) Date of filing: 14.08.2013
(51) Int. Cl.: C02F 1/02, C02F 103/36, C02F 101/38

(54) **PROCESS FOR PURIFYING MELAMINE PRODUCTION WASTEWATER**
VERFAHREN ZUR REINIGUNG VON ABWASSER AUS DER MELAMINHERSTELLUNG
PROCÉDÉ D'ÉPURATION DES EAUX USÉES LORS DE LA PRODUCTION DE MÉLAMINE

(30) Priority: 05.09.2012 RU 2012138038
(43) Date of publication of application: 15.07.2015
(73) Proprietor: Otkrytoe Aktsionernoe Obschestvo Research & Design Institute Of Urea And Organic Synthesis Products (OAO NIIK), Nizhny Novgorod Region 606008 (RU)
(72) Inventor: NIKOLAEV, Evgeny Yuryevich, Nizhny Novgorod Region g. Dzerzhinsk 606037 (RU); SKUDIN, Aleksei Georgievich, Nizhny Novgorod Region g. Dzerzhinsk 606009 (RU); PECHNIKOVA, Galina Nikolaevna, Krasnaya Gorka Settlementnt Dubki Village Nizhny Novgorod Region 606070 (RU); PROKOPYEV, Aleksandr Alekseevich, Nizhny Novgorod Region g. Volodarsk 606070 (RU); KUZNETSOV, Nikolai Mikhailovich, Nizhny Novgorod Region g. Dzerzhinsk 606000 (RU); KOSTIN, Oleg Nikolaevich, g. Nizhny Novgorod 603010 (RU); ESIN, Igor Veniaminovich, Nizhny Novgorod Region g. Dzerzhinsk 606000 (RU)
(74) Representative: Vossius & Partner Patentanwälte Rechtsanwälte mbB
(86) International application number: PCT/RU2013/000702
(87) International publication number: WO 2014/038979

(56) References cited:
- RU-C2- 2 400 431
- US-A1- 2009 294 272
- US-B2- 7 445 722

## Description

### Field of the Invention

The invention relates to methods of purifying wastewater formed during manufacturing of the melamine produced from urea by technologies applying alkali metal hydroxides water solutions for melamine purification and separation. More specifically, this invention relates to a process for purifying wastewater by thermal hydrolysis of impurities dissolved in the wastewater, which are formed during melamine synthesis and separation.

The mentioned impurities dissolved in the wastewater include triazine derivatives such as residual melamine, ammeline, ammelide, cyanuric acid, melam, melem, ureidomelamine and derivatives thereof. Ammeline, ammelide and cyanuric acid may present as alkali metal salts. Additionally, wastewater contains hydroxides and carbonates of alkali metals, for example, sodium carbonate, and may contain feedstock urea.

Sufficient treatment should be provided in order to ensure residual content of nitrogen-containing impurities in the wastewater below maximum permissible levels and concentrations. Impurities concentration level is regulated in accordance with each country's local laws. There are no standards accepted worldwide. Current requirements on impurities content in melamine plant wastewater are being tightened. As a benchmark, 1 mg of triazine derivatives per 1 liter of wastewater can be accepted as maximum allowable limit. The hydrolysis of urea proceeds at relatively low temperatures, so there is no problem with removal urea from the wastewater. Purifying wastewater from triazine derivatives causes great difficulty as their hydrolysis occurs at higher temperatures. The alkali metal hydroxides are presented in the wastewater after hydrolysis in the form of carbonates. Treated wastewater can be fully or partially reused (recycled) into melamine production process or removed outside the production plant.

### Background of the Invention

From the technical point of view, the method that is the closest to the proposed one is a known method of purifying wastewater containing alkali metal compounds which comprises thermal hydrolysis of wastewater at temperatures above 190°C, more particularly 220-240°C, under a pressure between 30 and 60 bar followed by separation of ammonia from the treated water (US 7445722, C02F 1/02, 2008).

The purpose of the invention according to US 7445722 is providing a process of wastewater purifying, as well as design of hydrolyzer suitable for providing the process, for ensuring required degree of purification from dissolved nitrogen-containing organic components at relatively low temperatures and pressures. The applicable conditions allow using the hydrolysis device with thinner walls to reduce investment.

It is indicated in the claims of the said patent that hydrolysis temperature should be above 190°C. In the specification, the temperature range is specified as lying at 220-260°C. In a preferred embodiment the hydrolysis temperature is 220-230°C, pressure is 30-60 bar (3.0-6.0 MPa). However, there is no data on impurity concentration in the purified wastewater. No residence time of wastewater in the hydrolyzer has been specified.

In a preferred embodiment, the mentioned hydrolyzer represents a horizontal cylindrical metal vessel divided into separate sections by vertical walls with lower and upper overflows. There are heating elements inside the hydrolyzer sections heated externally by steam or electricity. Wastewater is supplied from one end of the hydrolyzer and then passed sequentially through the sections where the hydrolysis of nitrogen-containing components takes place. Then it leaves through another end of the hydrolyzer. Vertical walls prevent an undesirable agitation of wastewater along the length of the hydrolyzer.

The testing of hydrolysis mode according to US 7445722 showed that the optimum hydrolysis temperature range of 220-230°C does not allow to get the required degree of purification within 1-2 hours, the time when the wastewater stays in the hydrolyzer. Treated wastewater contains tens of milligrams of triazine impurities per liter of water. Higher degree of purification is achieved by increasing residence time of wastewater in the hydrolyzer to 5 hours or more, but it results in increasing hydrolyzer size and weight.

The required degree of purification is achieved at 250-260°C when the wastewater residence time in hydrolyzer is about 1 hour, which is quite acceptable. But there may be a serious problem with hydrolyzer heating. This is considered to be due to the fact that high pressure saturated steam used in chemical industry has maximum pressure of 3.7-4.0 MPa, which corresponds to equilibrium temperatures of 245-250°C. Such a steam can heat the wastewater to temperature of about 230°C. To heat to higher temperatures, electric heating is required, which is economically disadvantageous: the cost of electrical energy is much higher than the same of steam.

Excessive ammonia should be removed from the treated wastewater coming from hydrolysis stage. Ammonia separation is carried out in a column unit by means of heat. This additional stage makes the process more complicated and expensive because of additional energy required.

Thus, disadvantages of this method are the following: low level of wastewater purification; the need to use hydrolyzer device of complex design equipped with directing walls and having internal heating system, wherein electrical heating and steam heating are hardly compatible; the need to use additional stage of ammonia separation from treated wastewater stream.

### Summary of the Invention

The technical task of the proposed invention is an improved method of wastewater treatment of melamine production plant.

The technical result that can be achieved by invention is increased degree of purification of wastewater and simplified process technology.

To achieve technical result, a process of treatment melamine production plant wastewater containing alkali metal compounds is provided. It includes thermal hydrolysis of wastewater at a temperature of 190-245°C, characterized by bubbling steam through the wastewater.

Surprisingly, we have found that the velocity of decomposition of impurities increases sharply under bubbling of steam through the wastewater. In turn, it results in increased level of purification of wastewater in comparison with the prior art at the same hydrolysis conditions - operating temperature, pressure, and the residence time of wastewater in the hydrolyzer. It should be noted that the mentioned effect was observed only for wastewater of melamine production plant, which wastewater comprises alkali metal compounds, for example, alkali metal hydroxide, and /or alkali metal carbonate, and/or alkaline salt of triazine derivative mentioned above. When alkali metal compounds are absent, the rate of hydrolysis of impurities does not increase when bubbling steam to hydrolyzer. Thus, the effect is achieved only for alkali metal compounds and steam being used jointly.

Acceleration of hydrolysis process as found allows achieving the desired degree of wastewater treatment for acceptable residence time of wastewater in the hydrolyzer with the commonly-used steam of pressure value as 3.7-4.0 MPa and a temperature of 245-250°C.

Steam fed into hydrolyzer is also used for wastewater heating, obviating the need to use indirect heating by means of built-in heat exchanger, simplifying the aspect of hydrolyzer design and improving its maintainability. If necessary, the temperature of hydrolysis can be increased to 240-245°C by feeding steam directly to hydrolyzer. Expensive electrical heating is not needed.

Steam supplied into hydrolyzer helps in excluding additional stage of ammonia separation from the treated wastewater leaving hydrolyzer. There is no need to use additional unit which makes the technology simpler.

In order to save steam, the water fed into hydrolyzer may be preheated in the recuperative heat exchanger by means of purified wastewater coming from the hydrolyzer. Untreated wastewater can be also preheated by means of other hot gaseous and liquid streams.

Wastewater treatment should be carried out by passing the steam preferably in amount of 5-20% of the amount of untreated wastewater. The temperature of steam should preferably exceed the work temperature of hydrolysis by 5-60°C. To control the heating mode, gaseous nitrogen and/or air can be bubbled additionally through the wastewater.

The hydrolyzer for purifying wastewater of melamine production plant is a horizontal-type or vertical-type cylindrical vessel equipped with internal devices for moving the wastewater in the required direction, means for untreated wastewater inlet and purified water removal, means for steam inlet and gas phase removal. Depending on the vessel arrangement, the wastewater flow may be directed by vertical baffles or plates of various design known in chemical industry. Steam can be supplied through bubble plates also described in technical literature.

### Brief Description of the Drawings

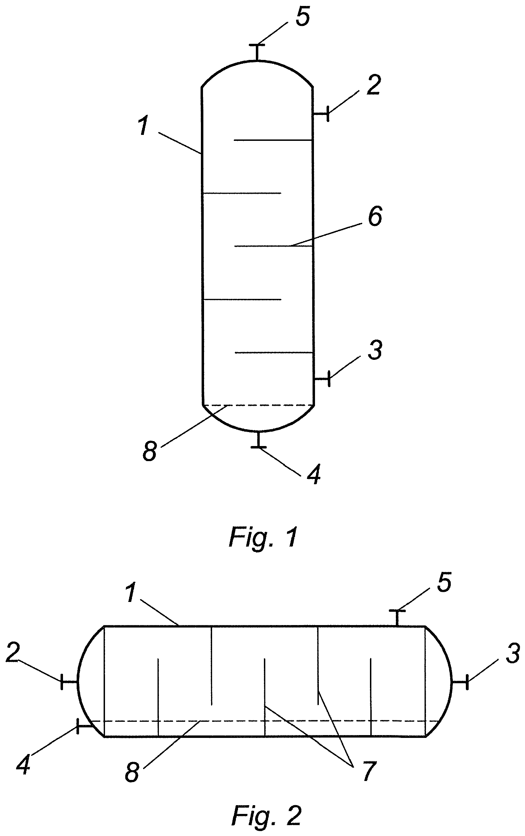

Schematic drawings of hydrolyzers are shown on Fig. 1 and 2. Fig. 1 represents vertical-type hydrolyzer, Fig. 2 - horizontal-type hydrolyzer.

In accordance with Fig. 1 and Fig. 2, the hydrolyzer consists of a body 1, untreated wastewater inlet pipe 2, purified water removal pipe 3, steam inlet pipe 4, gas phase removal pipe 5. Wastewater directing means are installed inside the body.

In case of hydrolyzer of vertical design, overflow plates 6 are used as wastewater directing means. Horizontal hydrolyzer is equipped with vertical baffles 7 with upper and lower overflows. Bubble plate 8 passing steam is placed at the bottom part of the body.

### Description of the Preferred Embodiments

When using vertical hydrolyzer (Fig. 1), wastewater is fed into the body 1 through wastewater inlet pipe 2 located at the top. The overflow plates 6 are located inside the unit. Wastewater is moving inside the unit, flowing from upper to lower plates. Steam is fed into the unit through the pipe 4. Steam passes through bubble plate 8 at the bottom part of the body. Purified water is removed from the unit via purified water removal pipe 3 at the bottom. The products of hydrolysis - ammonia, carbon dioxide and water vapour (gas phase) - are removed from the unit through gas phase removal pipe 5 at the top of the body.

When treating the water by means of horizontal-type hydrolyzer (Fig. 2) wastewater is fed into the body 1 through untreated water inlet pipe 2. Purified water is removed from the other end of the body through purified water removal pipe 3. Vertical baffles 7 are installed inside the body with lower and upper overflows, guiding the wastewater in an essentially meandering manner. Steam is fed into the unit through the pipe 4. Steam passes through bubble plate 8 located at the bottom of the body. The products of hydrolysis, i.e., ammonia, carbon dioxide, and water vapour (gas phase) are removed from the unit through gas phase removal pipe 5 at the top of the body.

Thus, to realize the proposed method of purifying wastewater, hydrolyzer of more simple design, comparing with the known one, is required.

The invention relating to wastewater purifying method by means of hydrolyzer shown on Fig. 1 and 2 is illustrated by the following Examples.

### Example 1.

The composition of melamine plant wastewater undergoing hydrolysis is the same as given in the corresponding patent US 7445722 (g/kg wastewater) :

| | |
|---|---|
| Urea | 2.0 |
| Melamine | 6.0 |
| Ammeline | 8.0 |
| Ammelide | 4.0 |
| Cyanuric acid | 0.1 |
| Melam | 0.01 |
| Sodium hydroxide | 15.0 |
| Water | the rest |

Hydrolysis is carried out in a stainless steel vertical-type vessel shown on Fig. 1. Before entering into hydrolyzer the wastewater is heated in the heat exchanger to 180°C. The hydrolyzer operating temperature is 220°C.

Steam for wastewater heating and bubbling with a temperature of 245° and a pressure of 3.7 MPa is applied in an amount of 20% by weight of an amount of wastewater. The residence time of the wastewater in the hydrolyzer is 1 hour. The results of impurity analysis performed by high performance liquid chromatography method (mg /kg) are given below.

| | |
|---|---|
| Urea | less than 0.1 |
| Melamine | 0.08 |
| Ammeline | less than 0.01 |
| Ammelide | 0.17 |
| Cyanuric acid | less than 0.01 |
| Melam | less than 0.01 |

It is evident that hydrolysis performed in accordance with the invention allows to reduce the content of residual impurities in the wastewater to the required level.

### Example 2 (comparative).

The composition of melamine plant wastewater undergoing hydrolysis is the same as given in Example 1.

Hydrolysis is carried out in chromium-nickel steel horizontal-type vessel equipped with side pipe for untreated wastewater inlet, side pipe for purified water removal, and upper device for gas phase removal. Before entering into hydrolyzer, the wastewater is heated in the heat exchanger to 180°C. The hydrolyzer is heated by an electric heater placed inside the hydrolyzer. Directing baffles are also located inside the hydrolyzer. Operating temperature of hydrolysis is 220°C.

The residence time of the wastewater in the hydrolyzer is 1 hour. The results of impurity analysis performed by high performance liquid chromatography method (mg/kg) are the following:

| | |
|---|---|
| Urea | less than 0.1 |
| Melamine | 8.2 |
| Ammeline | 0.5 |
| Ammelide | 17.9 |
| Cyanuric acid | 4.6 |
| Melam | less than 0.01 |

As can be seen from the results, hydrolysis performed in accordance with the prior art does not allow to reduce the content of residual impurities in the wastewater to the required level.

### Example 3.

The wastewater of melamine plant, used for hydrolysis, has a composition similar to Example 1.

Hydrolysis is carried out according to Example 1 in a vessel equipped with gaseous nitrogen/air mixture inlet pipe at the bottom part of the body (not shown on Fig. 1). Before entering into hydrolyzer, the wastewater is heated in the heat exchanger to 180°C. The operating temperature of hydrolysis is 190°C.

Steam for wastewater heating and bubbling with a temperature of 195° and a pressure of 1.4 MPa is applied in an amount of 5% by weight of an amount of wastewater. Gaseous nitrogen and air mixture in a ratio of 90:10 is additionally fed into hydrolyzer in the amount of 10% of the amount of wastewater. The residence time of the wastewater in the hydrolyzer is 2 hours. The results of impurity analysis performed by high performance liquid chromatography method (mg/kg) are given below:

| | |
|---|---|
| Urea | less than 0.1 |
| Melamine | 0.32 |
| Ammeline | 0.05 |
| Ammelide | 0.41 |
| Cyanuric acid | less than 0.01 |
| Melam | less than 0.01 |

Based on the data presented, it should be seen that hydrolysis carried out in accordance with the invention allows reducing the content of residual impurities in the wastewater to the required level.

### Example 4

The wastewater of melamine plant for hydrolysis has a composition similar to Example 1.

Hydrolysis is carried out in a stainless steel horizontal-type vessel shown on Fig. 2. Before entering the hydrolyzer, the wastewater is heated in the heat exchanger to 220°C. Hydrolyzer operating temperature is 245°C.

Steam for wastewater heating and bubbling with a temperature of 250° and a pressure of 4.0 MPa is applied in an amount of 10% by weight of an amount of wastewater. The residence time of the wastewater in the hydrolyzer is 0.5 hour. The results of impurity analysis performed by high performance liquid chromatography method (mg /kg) are given below.

| | |
|---|---|
| Urea | less than 0.1 |
| Melamine | 0.02 |
| Ammeline | less than 0.1 |
| Ammelide | 0.03 |
| Cyanuric acid | less than 0.01 |
| Melam | less than 0.01 |

As can be seen from the data, hydrolysis performed in accordance with the invention allows reducing the content of residual impurities in the wastewater to the required level.

### Industrial applicability

The invention may be used in the industrial melamine production process.

## Claims

1. A process for purifying melamine production wastewater containing alkali metal compounds, which includes thermal hydrolysis of wastewater at a temperature of 190-245°C **characterized in that** the steam is bubbled through the wastewater in a hydrolyzer, wherein the amount of bubbled steam is equal to 5-20% of the amount of untreated wastewater and the bubbled steam temperature exceeds hydrolysis work temperature by 5-60°C.

2. The process according to claim 1 **characterized in that** gaseous nitrogen and/or air in an amount up to 10% of the amount of untreated wastewater is additionally bubbled through the wastewater.

## Patentansprüche

1. Ein Verfahren zur Reinigung von Alkalimetallverbindungen enthaltendem Abwasser aus der Melaminherstellung, das eine thermische Hydrolyse von Abwasser bei einer Temperatur von 190-245 °C einschließt, **dadurch gekennzeichnet, dass** der Dampf in einer Hydrolyseapparatur durch das Abwasser geblubbert wird, wobei die Menge an eingeblasenem Dampf 5-20% der Menge an unbehandeltem Abwasser beträgt und die Temperatur des eingeblasenen Dampfes die Hydrolyse-Arbeitstemperatur um 5-60 °C übersteigt.

2. Das Verfahren gemäß Anspruch 1, **dadurch gekennzeichnet, dass** gasförmiger Stickstoff und/oder Luft in einer Menge von bis zu 10% der Menge an unbehandeltem Abwasser zusätzlich durch das Abwasser geblubbert wird.

## Revendications

1. Procédé pour purifier des eaux usées de production de mélamine contenant des composés de métal alcalin, qui comprend une hydrolyse thermique des eaux usées à une température de 190 à 245 °C, **caractérisé en ce que** la vapeur est mise à barboter à travers les eaux usées dans un hydrolyseur, dans lequel la quantité de vapeur mise à barboter est égale à 5 à 20 % de la quantité des eaux usées non traitées et la température de la vapeur mise à barboter dépasse de 5 à 60 °C la température de travail d'hydrolyse.

2. Procédé selon la revendication 1, **caractérisé en ce que** de l'azote gazeux et/ou de l'air en une quantité allant jusqu'à 10 % de la quantité des eaux usées non traitées sont de plus mis à barboter à travers les eaux usées.
